# FASCICULE DE BREVET EUROPEEN

(11) **EP 0 465 687 B1**
(45) Date de publication et mention de la délivrance du brevet: **17.05.1995**
(21) Numéro de dépôt: 90113010.4
(22) Date de dépôt: 07.07.1990
(51) Int. Cl.: G01F 11/02, G01F 15/12

(54) **Dispositif doseur**
Dosiervorrichtung
Dosing device

(43) Date de publication de la demande: 15.01.1992
(73) Titulaire: SOCIETE DES PRODUITS NESTLE S.A., 1800 Vevey (CH)
(72) Inventeur: Montesissa, Giancarlo, Robbio (IT)

(56) Documents cités:
- DE-C- 3 317 608
- FR-A- 2 455 269
- GB-A- 2 156 911

## Description

L'invention concerne un dispositif doseur, notamment pour le remplissage d'un produit pâteux dans des alvéoles, monté sur une machine d'emballage entraînée pas à pas.

Un tel dispositif comprend une chambre de dosage reliée en amont à une trémie d'alimentation et en aval à un bec de coulée et des moyens d'aspiration du produit dans la chambre et d'évacuation du produit vers le bec de coulée comprenant un piston doseur dont le corps débouche dans la chambre entre le corps de soupape et le bec de coulée et un clapet de refoulement entre la chambre de dosage et le bec de coulée. Le document DE-A-3 317 608 divulgue un tel dispositif.

Un dispositif connu de dosage de produits pâteux, en particulier de fromage fondu faisant par exemple l'objet du brevet CH 604.134, comprend un piston doseur qui aspire le produit dans le cylindre du piston constituant la chambre de dosage et le refoule vers un bec de coulée par l'intermédiaire d'un boisseau rotatif dont le canal a une ouverture latérale communiquant successivement avec l'alimentation et avec le bec de coulée, ainsi qu'une ouverture axiale communiquant en permanence avec le cylindre. A la fin d'un cycle de production, un tel dispositif doit être démonté, débarrassé des résidus de produit et placé dans une machine à laver à jets d'eau pour être nettoyé. Les pièces sont enfin placées dans un bassin de solution désinfectante, puis remontées le lendemain. Ces opérations entraînent, outre leur coût et la perte de temps, une usure des pièces soumises à des démontages et à des remontages continuels.

Un autre dispositif, décrit dans le brevet FR 3,392,252, relatif au dosage de produits alimentaires liquides, comprend une chambre cylindrique dans laquelle deux pistons coaxiaux, l'un de commande et d'obturation, l'autre de dosage, actionnés indépendamment l'un de l'autre, se déplaçent l'un derrière l'autre dans le cylindre, la tige du piston de commande et d'obturation traversant la tige creuse du piston de dosage. En vue du rinçage sans démontage du dispositif, les deux pistons peuvent être retirés dans une partie supérieure de plus grand diamètre du cylindre pour permettre l'admission des liquides de nettoyage et de la vapeur de stérilisation. Ce dispositif donne peut-être satisfaction dans le cas de produits liquides. Cependant pour les produits visqueux, voire collants tels que par exemple le fromage fondu, il présente certains inconvénients.
- L'admission du produit dans le cylindre s'effectue de bas en haut par une ouverture latérale qui est fermée/ouverte par le piston d'obturation travaillant sur la surface interne du cylindre. Le remplissage de la chambre est plus difficile qu'un remplissage de haut en bas. Par ailleurs, les fenêtres d'aspiration de ce type, c'est-à-dire ménagées dans une surface courbe, usent très rapidement les joints d'étanchéité.
- Du fait que l'extrémité du piston d'obturation sert également de soupape de décharge, il y a une phase intermédiaire entre les phases d'aspiration et de refoulement dans laquelle le piston décharge un résidu de produit qui se trouve dans son siège. De ce fait, des gouttelettes de produit peuvent se former.
- Le nettoyage soigneux des éléments constituant le dispositif, puis leur stérilisation, devraient être difficiles, en particulier au niveau des joints d'étanchéité montés sur la tête du piston de dosage soit côté cylindre, soit côté tige du piston d'obturation.
- Par ailleurs, les cheminements des fluides de nettoyage et d'hygiénisation sont différents de celui du produit à doser, ce qui nécessite des espaces de nettoyage et des circuits de nettoyage et d'hygiénisation autonomes. De plus, lors des phases de nettoyage et d'hygiénisation, les pistons d'obturation et de dosage ne sont pas en mouvement.

La présente invention a pour but d'améliorer les dispositifs doseurs des types précédents de manière à pouvoir travailler avec des matières pâteuses dans des conditions hautement hygiéniques proches de la stérilité et à pouvoir les nettoyer et les hygiéniser en circuit fermé sans démontage.

Dans ce but, le dispositif selon l'invention est caractérisé par le fait qu'il comprend
une soupape d'aspiration à piston dont le corps débouche dans la chambre immédiatement en dessous de la trémie,
que la chambre de dosage est inclinée vers le bas dans la direction du bec de coulée,
que, en phase de production, la soupape et le piston sont commandés par les moyens d'entraînement de la machine d'emballage et
que, en phases de nettoyage et d'hygiénisation, la soupape et le piston sont mis en mouvement par des moyens d'entraînement indépendants de ceux de la machine d'emballage.

L'invention concerne également un procédé de nettoyage et d'hygiénisation sans démontage d'un dispositif doseur destiné à travailler dans des conditions hautement hygiéniques, proches de la stérilité, notamment pour le remplissage d'un produit pâteux, s'appliquant à un dispositif tel que défini dans l'une des revendications 1 à 8 caractérisé par le fait que les fluides de nettoyage et d'hygiénisation suivent le même cheminement que le produit et que les moyens d'aspiration et d'évacuation du produit sont en mouvememt durant toute l'opération.

L'invention sera mieux comprise à l'aide des dessins représentant un mode de réalisation du dispositif doseur.
Dans ceux-ci:
- la figure 1 est une coupe longitudinale médiane du dispositif montrant, en phase de production, l'aspiration du produit dans la chambre de dosage,
- la figure 2 est une coupe longitudinale médiane partielle du dispositif montrant, en phase de production, le dosage du produit vers le bec de coulée,
- la figure 3 est une coupe longitudinale médiane partielle selon AA des figures 4 et 5, d'une variante du dispositif pendant les phases de nettoyage et d'hygiénisation,
- la figure 4 est une coupe partielle selon BB de la figure 3,
- la figure 5 est une coupe partielle selon CC de la figure 3 et
- la figure 6 est un schéma général du circuit d'hygiénisation et de nettoyage.

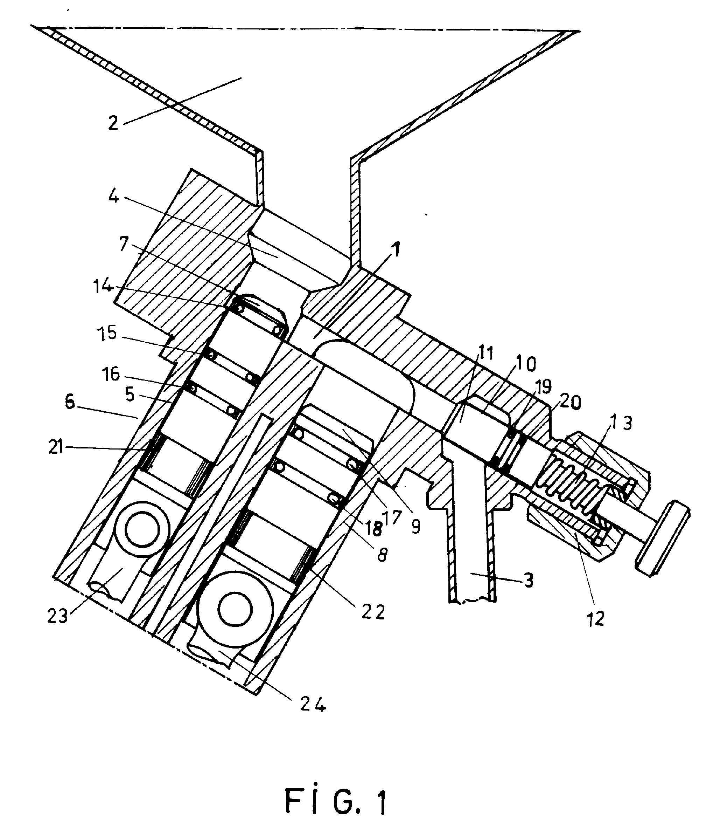

A la figure 1, la chambre de dosage 1 est reliée en amont à la trémie 2 et en aval au bec de coulée par le tube 3.
La chambre de dosage est inclinée vers le bas dans la direction du bec de coulée par le tube 3. La trémie débouche dans la chambre 1 par l'ouverture tronconique 4 située dans l'alignement du corps 5 de la soupape d'aspiration 6 à piston 7. Dans la chambre 1, entre la soupape d'aspiration 6 et le tube 3, débouche le corps 8 du piston doseur 9. Le clapet 10 à piston 11 peut fermer la chambre de dosage 1 vers le bec de coulée, le collier de serrage 12 permettant de régler la tension du ressort 13 qui assure la fermeture du clapet 10 dans la phase d'aspiration. L'étanchéité en mouvement entre la chambre de dosage et les pistons 7,9 et 11 est assurée par les joints d'étanchéité annulaires 15,16,17,18,19 et 20. Le joint 14 étanchéifie entre la chambre 1 et la trémie d'alimentation 2. Ces joints offrent une bonne résistance à l'usure, aux agents chimiques de nettoyage et à la température et sont stérilisables. Ils sont étanches à la vapeur à haute température. Les bagues 21 et 22 assurent le guidage axial des pistons de manière à limiter l'usure des joints d'étanchéité. Les bielles 23 et 24 sont reliées soit à des leviers (non représentés) actionnés par les moyens d'entraînement d'une machine d'emballage, soit à des vérins pneumatiques de commande autonome (non représentés) ainsi qu'il sera expliqué ci-après.

Le fonctionnement du dispositif comprend successivement une phase d'hygiénisation, une phase de production et une phase de nettoyage. Pendant les phases d'hygiénisation et de nettoyage, les pistons sont découplés des moyens d'entraînement de la machine d'emballage et reliés au dispositif pneumatique autonome qui les met en mouvement alternatif lent.

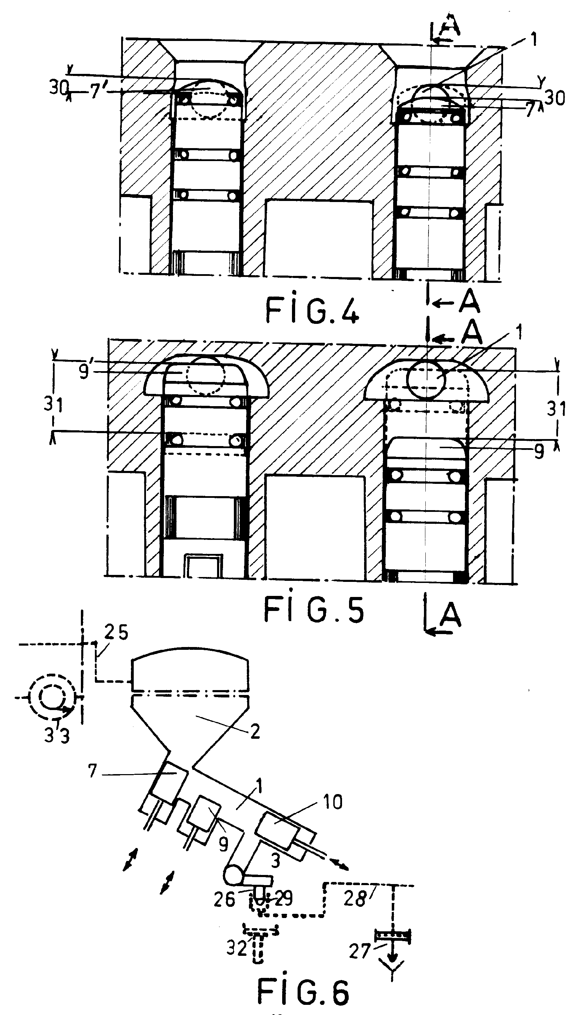

Pendant la phase de production, ce dispositif est découplé des pistons qui sont alors reliés à la motorisation de la machine d'emballage de manière à assurer la synchronisation du dosage et de l'emballage du produit et mis en mouvement alternatif rapide, la cadence de production étant bien supérieure à celle existant pendant les phases d'hygiénisation et de nettoyage. Pour hygiéniser le dispositif, comme représenté à la figure 6, on introduit de la vapeur par la ligne 25 dans la trémie 2. Cette trémie est en fait une cuve fermée pouvant être mise sous pression. La vapeur envahit la chambre de dosage 1, chauffe et stérilise les têtes du piston d'aspiration 7, du piston doseur 9 et du clapet 10, puis s'échappe par le tube 3 à travers le bec de coulée 26 vers le purgeur 27. Le bec de coulée 26 est relié au purgeur 27 par le circuit de retour 28 au moyen du capuchon 29.

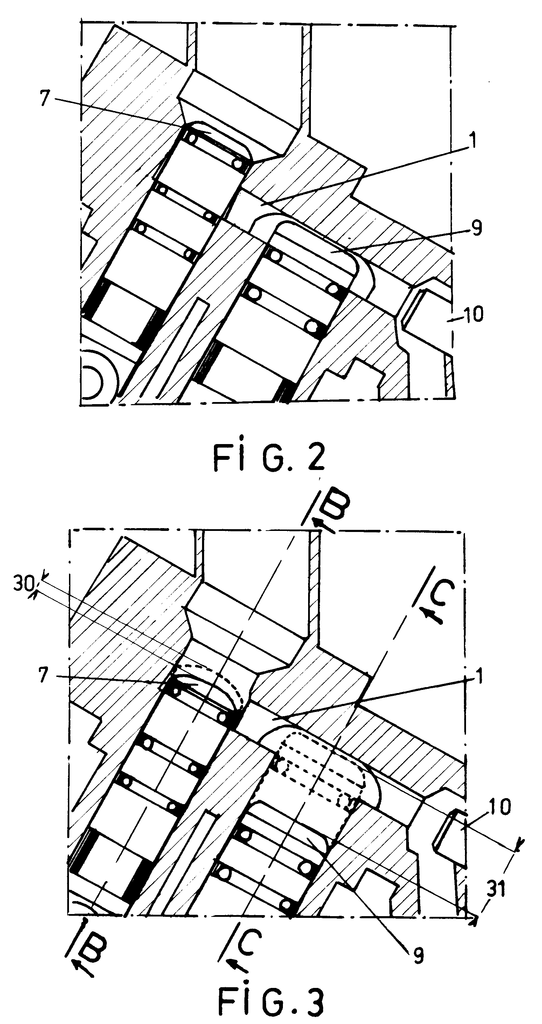

Comme représenté à la figure 3, on ouvre complètement le clapet 10 en dévissant le collier de serrage jusqu'à ce que le ressort 13 ne soit plus sous tension. Dans la représentation des figures 3, 4 et 5, le dispositif comprend deux chambres de dosage disposées en parallèle débouchant sur deux becs de coulée.
Le piston 7 a un mouvement alternatif de faible amplitude, 30, entre son point mort inférieur, en trait plein et son point mort supérieur en pointillé. Le piston 9 est animé d'un mouvement alternatif de forte amplitude 31, entre son point mort inférieur, en trait plein et son point mort supérieur, position marquée en pointillé. Les mouvements du piston d'aspiration 7 et du piston doseur 9 associés à l'une des chambres sont l'inverse des mouvements du piston d'aspiration 7′ et du piston doseur 9′ associés à l'autre chambre. Ainsi, lorsque les pistons 7 et 9 sont à leur position basse dans la première chambre, les pistons 7′ et 9′ correspondants dans la seconde chambre sont à leur position haute. Du fait de la pente de la chambre de dosage, l'eau de condensation formée le cas échéant après le passage de la vapeur ne stagne pas, mais s'écoule hors du dispositif, évitant ainsi un manque de stérilité à cause de la présence du condensat.

Dans la phase suivante de production, les pistons d'aspiration et doseur sont reliés à l'entraînement de la machine d'emballage. Le bec de coulée est dégagé du capuchon 29 et le clapet 10 fermé par mise sous tension du ressort 13 en serrant le collier de serrage 12. Le produit arrivant par la ligne 25 est aspiré depuis la trémie 2 vers la chambre 1 lorsque le piston d'aspiration 7 descend jusqu'à son point mort inférieur et le piston 9 descend immédiatement après jusqu'à son point mort inférieur, positions représentées à la figure 1. Le piston 7 remonte d'abord jusqu'à son point mort supérieur représenté à la figure 2, puis le piston 9 remonte à son tour jusqu'à son point mort supérieur représenté à la figure 2. Durant cette opération, le piston 7 obture l'arrivée de produit et le piston 9 chasse une dose de produit par le tube 3 vers le bec de coulée en repoussant le clapet 10 par la pression exercée. Dans la variante préférée comprenant deux chambres de dosage, et deux becs de coulée, les mouvements des pistons sont parallèles de sorte que deux alvéoles 32 sont remplies simultanément.

Une fois la production achevée, on procède au nettoyage du dispositif. Pour ce faire, on tourne le bec de coulée 26 d'environ 90° vers l'arrière, autour d'un axe horizontal (position non représentée), on ouvre le clapet 10 et on branche le tube 3 sur la ligne 28. Les fluides de nettoyage sont envoyés à travers le dispositif doseur au moyen de la pompe relais 33 par la ligne 25 et la trémie 2, puis sont évacués par la ligne 28.

Les pistons 7 et 9, préalablement découplés du mécanisme d'entraînement de la machine d'emballage sont reliés au dispositif de mise en mouvement autonome. Ces mouvements des pistons 7 et 9 sont les mêmes que décrits précédemment en liaison avec la phase d'hygiénisation. Dans la représentation des figures 3, 4 et 5, la course du piston d'aspiration 7 est beaucoup plus faible que celle du piston doseur 9. En position haute, le piston 7 laisse partiellement ouvert le passage entre la trémie et la chambre. Quant au piston 9, l'amplitude de son mouvement est plus grande que celle existant en phase de production. Du fait de leur position et de leur mouvement alternatif, les têtes de piston 7 et 9 sont entièrement baignées par les fluides de nettoyage de même que la partie des corps de piston 5 et 8 en contact avec le produit jusqu'au joints 15 et 17. De même, le piston 11 et le corps du clapet 10 en contact avec le produit sont accessibles aux fluides de nettoyage jusqu'au joint 19. Le clapet 10 est maintenu ouvert en dévissant le collier de serrage 12. Aux figures 4 et 5, on voit que les mouvements des pistons 7 et 9 associés à l'une des chambres sont opposés aux mouvements des pistons 7′ et 9′ associés à l'autre chambre. Cette disposition a l'avantage d'assurer le passage des fluides à débit d'amenée continu avec un débit de sortie progressif alternativement vers un bec de coulée puis l'autre.

Dans le mode de réalisation illustré ci-dessus, les mouvements alternatifs des pistons de soupape et doseur associés à une chambre sont de même sens dans les phases d'hygiénisation et de nettoyage. Ils pourraient sans inconvénient être de sens opposés.

On a illustré ci-dessus un dispositif comportant une ou deux chambres de dosage. Bien entendu, un dispositif selon l'invention pourrait comporter plus de deux chambres reliées à la trémie d'alimentation débouchant chacune sur un bec de coulée. Dans ce cas, les mouvements de la soupape d'aspiration et du piston doseur associés à chacune des chambres pendant le nettoyage et l'hygiénisation seraient de préférence synchronisés de manière à assurer le passage des fluides à partir d'une alimentation continue alternativement vers les différents becs de coulée sans formation de flux préférentiels.

Dans l'exécution ci-dessus, on a mentionné des moyens de commande autonomes pneumatiques des pistons d'aspiration et doseur pendant les phases d'hygiénisation et de nettoyage.
On peut également prévoir d'actionner ces pistons par des moyens mécaniques, par exemple par cames ou excentriques guidés agissant sur des leviers. Par ailleurs, on a montré un clapet d'obturation à ressort.

Le clapet pourrait également être actionné pneumatiquement ou mécaniquement en synchronisme avec les pistons d'aspiration et doseur par le même dispositif de mise en mouvement.

Bien que le dispositif soit spécialement adapté au dosage des pâtes de fromage, on peut bien entendu l'utiliser pour doser des portions d'autres produits alimentaires pâteux et le cas échéant collants tels que des pâtes de fruits, de chocolat, des masses de confiserie, des pâtes de céréales, des purées, ou encore des produits pâteux en dehors du domaine alimentaire. Il est particulièrement avantageux pour doser des produits pâteux de manière hautement hygiénique nécessitant un travail dans des conditions proches de la stérilité.

Par la conformation sans angles morts de la chambre de dosage et les formes arrondies des têtes de piston, toutes les parties en contact avec le produit sont aisément accessibles aux fluides de nettoyage et d'hygiénisation.
Un avantage déterminant du dispositif selon l'invention est que toutes les parties mobiles en contact avec le produit sont en mouvement dans les phases d'hygiénisation et de nettoyage. Selon l'invention, ces opérations peuvent être effectuées avec la machine d'emballage arrêtée grâce à un système de motorisation autonome. L'arrêt de la machine d'emballage pendant ces phases permet, outre la moindre usure et la moindre consommation d'énergie, de laisser en place les matériaux d'emballage des portions, tels que par exemple, les bandes formeuses des coquilles et les bandes d'arrachage pour l'ouverture facilitée des portions de fromage fondu. Ceci représente un gain de temps appréciable au moment de la mise en route de la production.

## Revendications

1. Dispositif doseur, notamment pour le remplissage d'un produit pâteux dans des alvéoles, monté sur une machine d'emballage entraînée pas à pas, comprenant une chambre de dosage (1) reliée en amont à une trémie d'alimentation (2) et en aval à un bec de coulée (3) et des moyens d'aspiration (6) du produit dans la chambre et d'évacuation du produit vers le bec de coulée comprenant
un piston doseur (9) dont le corps débouche dans la chambre entre le corps de soupape et le bec de coulée et
un clapet de refoulement (10) entre la chambre de dosage et le bec de coulée caractérisé par le fait qu'il comprend
une soupape d'aspiration (6) à piston dont le corps débouche dans la chambre (1) immédiatement en dessous de la trémie (2),
que la chambre de dosage est inclinée vers le bas, dans la direction du bec de coulée,
que, en phase de production, la soupape et le piston sont commandés par les moyens d'entraînement de la machine d'emballage et
que, en phases de nettoyage et d'hygiénisation, la soupape et le piston sont mis en mouvement par des moyens d'entraînement indépendants de ceux de la machine d'emballage.

2. Dispositif selon la revendication 1, caractérisé par le fait que, en phase de remplissage, le piston de soupape (7) et le piston doseur (9) sont animés de mouvements de translation alternatifs de même sens, de haut en bas en phase d'aspiration, puis de bas en haut en phase de dosage.

3. Dispositif selon la revendication 2, caractérisé par le fait que la course du piston de soupape (7) est telle que, dans sa position de point mort supérieur, il obture le passage (4) de la trémie vers la chambre.

4. Dispositif selon la revendication 1, caractérisé par le fait que, pendant les phases de nettoyage et d'hygiénisation, le piston de soupape (7) et le piston doseur (9) sont animés de mouvements de translation alternatifs de même sens ou de sens différent.

5. Dispositif selon la revendication 4, caractérisé par le fait que, la course du piston de soupape (7) est telle qu'en position haute il laisse partiellement ouvert le passage (4) entre la trémie et la chambre, le piston se trouvant dans une position intermédiaire entre le point mort supérieur et le point mort inférieur.

6. Dispositif selon la revendication 1, caractérisé par le fait que le piston de soupape (7) et le piston doseur (9) sont munis de joints étanches aux liquides et à la vapeur à haute température.

7. Dispositif selon la revendication 1, caractérisé par le fait que le clapet de refoulement (10) est muni de moyens réglables assurant l'obturation du bec de coulée (3) en phase d'aspiration et le passage permanent des fluides en phase de nettoyage et d'hygiénisation.

8. Dispositif selon la revendication 1, caractérisé par le fait qu'il comprend plusieurs chambres de dosage reliées à la trémie d'alimentation débouchant chacune sur un bec de coulée et que les mouvements de la soupape d'aspiration et du piston doseur associés à chacune des chambres pendant les phases de nettoyage et d'hygiénisation sont synchronisés, de manière à assurer le passage des fluides à partir d'une alimentation continue alternativement vers les différents becs de coulée.

9. Procédé de nettoyage et d'hygiénisation sans démontage d'un dispositif doseur destiné à travailler dans des conditions hautement hygiéniques proches de la stérilité, notamment pour le remplissage d'un produit pâteux, s'appliquant à un dispositif tel que défini dans l'une des revendications 1 à 8, caractérisé par le fait que les fluides de nettoyage et d'hygiénisation suivent le même cheminement que le produit et que les moyens d'aspiration et d'évacuation du produit sont en mouvement durant toute l'opération.

## Patentansprüche

1. Dosiervorrichtung, insbesondere zum Einfüllen eines teigartigen Produkts in Taschen, die auf einer schrittweise angetriebenen Verpackungsmaschine montiert ist und eine Dosierkammer (1), die eingangsseitig mit einem Beschickungstrichter (2) und ausgangsseitig mit einem Gießstutzen (3) verbunden ist, und Einrichtungen (6) zum Ansaugen des Produkts in die Kammer und zur Abfuhr des Produkts auf den Gießstutzen zu besitzt, die einen Dosierkolben (9), dessen Gehäuse zwischen dem Ventilgehäuse und dem Gießstutzen in die Kammer mündet, und ein Druckventil (10) zwischen der Dosierkammer und dem Gießstutzen aufweisen, dadurch gekennzeichnet, daß sie ein Kolben-Saugventil (6) besitzt, dessen Gehäuse unmittelbar unter dem Trichter (2) in die Kammer (1) mündet, daß die Dosierkammer nach unten in Richtung auf den Gießstutzen geneigt ist, daß das Ventil und der Kolben in der Produktionsphase durch die Antriebseinrichtungen der Verpackungsmaschine angetrieben werden und daß das Ventil und der Kolben in Reinigungs- und Hygienisierungsphasen durch von den Antriebseinrichtungen der Verpackungsmaschine unabhängige Antriebseinrichtungen in Bewegung versetzt werden.

2. Vorrichtung nach Anspruch 1, dadurch gekennzeichnet, daß der Ventilkolben (7) und der Dosierkolben (9) in der Füllphase in hin- und hergehende Translationsbewegungen im gleichen Sinn versetzt werden, und zwar in der Saugphase von oben nach unten und dann in der Dosierphase von unten nach oben.

3. Vorrichtung nach Anspruch 2, dadurch gekennzeichnet, daß der Hub des Ventilkolbens (7) so gewählt ist, daß er in seiner oberen Totpunktstellung den Durchgang (4) vom Trichter zur Kammer verschließt.

4. Vorrichtung nach Anspruch 1, dadurch gekennzeichnet, daß der Ventilkolben (7) und der Dosierkolben (9) während der Reinigungs- und Hygienisierungsphasen in hin- und hergehende Translationsbewegungen im gleichen Sinn oder in verschiedenem Sinn versetzt werden.

5. Vorrichtung nach Anspruch 4, dadurch gekennzeichnet, daß der Hub des Ventilkolbens (7) so gewählt ist, daß er in der oberen Stellung den Durchgang zwischen dem Trichter und der Kammer partiell offenläßt, wobei sich der Kolben in einer Zwischenstellung zwischen dem oberen Totpunkt und dem unteren Totpunkt befindet.

6. Vorrichtung nach Anspruch 1, dadurch gekennzeichnet, daß der Ventilkolben (7) und der Dosierkolben (9) mit Dichtringen versehen sind, die gegenüber Flüssigkeiten und Dampf hoher Temperatur dicht sind.

7. Vorrichtung nach Anspruch 1, dadurch gekennzeichnet, daß das Druckventil (10) mit verstellbaren Einrichtungen versehen ist, die die Verschließung des Gießstutzens (3) in der Saugphase und den ständigen Durchgang der Fluide in der Reinigungs- und Hygienisierungsphase gestatten.

8. Vorrichtung nach Anspruch 1, dadurch gekennzeichnet, daß sie mehrere Dosierkammern besitzt, die mit dem Beschickungstrichter verbunden sind und jeweils auf einen Gießstutzen zu ausmünden, und daß die Bewegungen des Saugventils und des Dosierkolbens, die jeder der Kammern zugeordnet sind, während der Reinigungs- und Hygienisierungsphasen so sind, daß der Durchgang der Fluide von einer kontinuierlichen Versorgung aus abwechselnd auf die einzelnen Gießstutzen zu gewährleistet wird.

9. Verfahren zur Reinigung und Hygienisierung ohne Demontage einer Dosiervorrichtung, die dazu bestimmt ist, unter hoch hygienischen Bedingungen, die der Sterilität nahekommen, zu arbeiten, insbesondere zum Einfüllen eines teigartigen Produkts, wobei das Verfahren auf eine Vorrichtung nach einem der Ansprüche 1 bis 8 angewandt wird, dadurch gekennzeichnet, daß die Reinigungs- und Hygienisierungsfluide denselben Weg nehmen wie das Produkt und daß die Einrichtungen zum Ansaugen und Abführen des Produkts während des gesamten Arbeitsgangs in Bewegung sind.

## Claims

1. A metering unit, more particularly for filling cups with a paste-form product, fitted to a packaging machine operated stepwise, comprising a metering chamber (1) connected upstream to a feed hopper (2) and downstream to a pouring nozzle (3) and means (6) for drawing the product under suction into the chamber and for removing the product towards the pouring nozzle comprising a metering piston (9) of which the body opens into the chamber between the valve body and the pouring nozzle and a delivery flap (10) between the metering chamber and the pouring nozzle, characterized in that it comprises a piston intake valve (6) of which the body opens into the chamber (1) immediately below the hopper (2), in that the metering chamber is inclined downwards in the direction of the pouring nozzle, in that, in the production phase, the valve and the piston are controlled by the drive mechanism of the packaging machine and in that, in the cleaning and sanitizing phases, the valve and the piston are moved by drive means independent of those of the packaging machine.

2. A metering unit as claimed in claim 1, characterized in that, in the filling phase, the valve piston (7) and the metering piston (9) are moved alternately in the same direction, namely downwards during the intake phase and then upwards during the metering phase.

3. A metering unit as claimed in claim 2, characterized in that the stroke of the valve piston (7) is such that, in its upper dead centre position, it blocks the passage (4) from the hopper to the chamber.

4. A metering unit as claimed in claim 1, characterized in that, during the cleaning and sanitizing phases, the valve piston (7) and the metering piston (9) are moved alternately in the same direction or in opposite directions.

5. A metering unit as claimed in claim 4, characterized in that, the stroke of the valve piston (7) is such that, in the upper position, it leaves the passage (4) between the hopper and the chamber partly open, the piston being situated in an intermediate position between the upper dead centre position and the lower dead centre position.

6. A metering unit as claimed in claim 1, characterized in that, the valve piston (7) and the metering piston (9) are equipped with seals impervious to liquids and to steam at high temperature.

7. A metering unit as claimed in claim 1, characterized in that, the delivery flap (10) is equipped with adjustable means which block the pouring nozzle (3) during the intake phase and ensure the permanent passage of fluids in the cleaning and sanitizing phases.

8. A metering unit as claimed in claim 1, characterized in that it comprises several metering chambers connected to the feed hopper of which each opens onto a pouring nozzle and in that the movements of the intake valve and the metering piston associated with each of the chambers during the cleaning and sanitizing phases are synchronized to ensure the passage of the fluids from a continuous feed alternately to the various pouring nozzles.

9. A process for cleaning and sanitizing a metering unit intended to operate under highly hygienic, near-sterile conditions, more particularly for filling containers with a paste-form product, without the metering unit having to be dismantled, used in a unit as defined in one of the claims 1 to 8, characterized in that the cleaning and sanitizing fluids follow the same path as the product and the means for drawing in and removing the product are in motion throughout the operation.
